# EUROPEAN PATENT SPECIFICATION

(11) **EP 1 092 889 B1**
(45) Date of publication and mention of the grant of the patent: **09.04.2003**
(21) Application number: 99830648.4
(22) Date of filing: 14.10.1999
(51) Int. Cl.: F16D 65/12

(54) **Disc for disc brake**
Scheibe für eine Scheibenbremse
Disque pour frein à disque

(43) Date of publication of application: 18.04.2001
(73) Proprietor: Freni Brembo S.p.A., 24035 Curno, Bergamo (IT)
(72) Inventor: Tironi, Giovanni Mario, 24044 Dalmine (Bergamo) (IT); Cavagna, Lorenzo, 24040 Bonate Sopra (Bergamo) (IT)
(74) Representative: Maccalli, Marco

(56) References cited:
- EP-A- 0 809 037
- DE-A- 19 528 434
- DE-B- 1 134 409
- US-A- 3 747 712
- US-A- 5 823 303

## Description

The present invention relates to a disc for an air-cooled disc brake, particularly, but not exclusively, for applications in the motor vehicle field.

As is known, a disc of the type specified above consists of two coaxial parts. A first part, the supporting bell, is designed to be connected to the wheel hub of a vehicle, while the remaining peripheral part, the braking strip, is designed to interact with the calipers of the disc brake to exert the braking action on the vehicle.

It is also known that, during the operation of the brakes, the friction between the pads of the brake calipers and the surface of the braking strip generates a large amount of heat which has to be dissipated. The heat generated causes the appearance of numerous undesired phenomena, primarily the overheating of the components and their consequent deformation.

With reference to the prior art discs, it should be noted that the deformations due to thermal stresses lead to problems in the operation of the disc brake, primarily the non-uniform wear of the pads of the brake caliper. This is mainly due to the fact that, unlike the braking strip, which tends to be deformed radially while remaining coplanar, the supporting bell is deformed into a conical configuration which causes warping of the braking strip. Essentially, the deformation of the supporting bell causes the warping and consequently the loss of coplanarity of the braking strip.

It is clear from the above that it is necessary both to reduce the transmission of heat from the braking strip to the supporting bell to a minimum and, at the same time, to allow the braking strip to expand radially under the effect of the thermal stresses to which it is subjected, in a way that is, as far as possible, independent of the supporting bell.

The problem to which the present invention relates is that of devising a disc for a disc brake of the type disclosed in US-A- 5 823 303, such a disc having structural and functional characteristics such that the aforesaid requirement is met and the disadvantages cited with reference to the prior art are avoided.

This problem is resolved by a disc for a disc brake according to Claim 1.

Further characteristics and the advantages of the disc for a disc brake according to the invention will be made clear by the following description of a preferred embodiment of the invention, provided for guidance and without any limiting intent, with reference to the attached figures, in which:
- Figure 1 shows a schematic front view of a disc for a disc brake according to the invention;

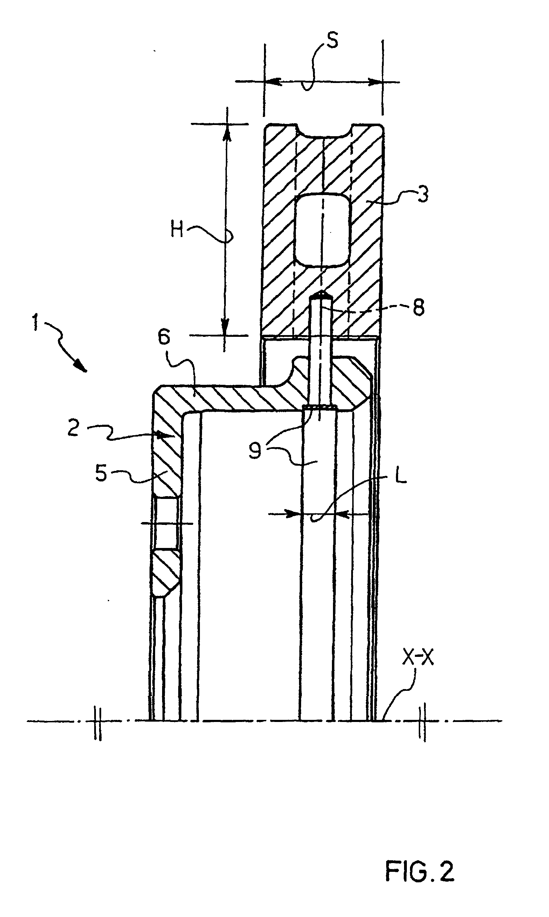

- Figure 2 shows a view in section along the line II-II in Figure 1.

With reference to the aforesaid figures, the number 1 indicates in a general way a disc according to the invention, designed to be used in a disc brake (not shown) of a vehicle such as a motor car.

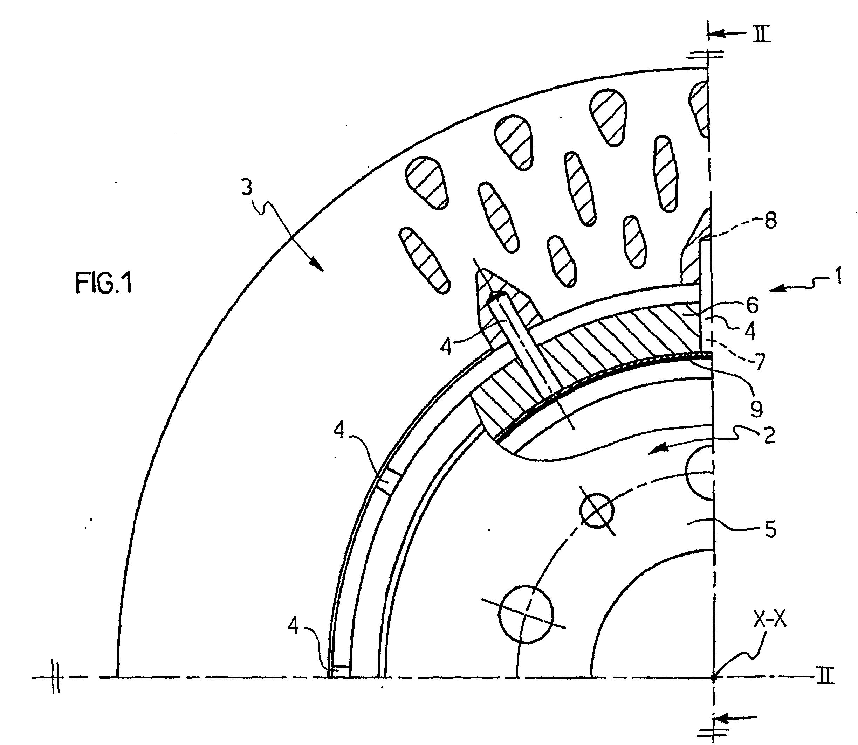

The disc 1 is of essentially circular shape and extends about an axis of symmetry indicated by X-X (one quarter of the disc 1 is represented in Figure 1).

The disc 1 comprises a supporting bell 2, a braking strip 3 coaxially mounted on the bell 2 and a plurality of connecting elements 4 for connecting the braking strip 3 to the supporting bell 2.

The supporting bell 2 comprises a central portion 5 designed to be connected, in a conventional way, to the wheel hub of a vehicle, and a peripheral annular portion 6 which projects from the central portion 5 in a direction essentially parallel to the axis X-X.

The braking strip 3 consists of an annular disc of predetermined thickness S and height H, which is coaxially supported by the peripheral annular portion 6 of the supporting bell 2. The braking strip 3 is designed to interact with the calipers of the disc brake to exert the braking action on the vehicle.

In the example, the connecting means 4 consist of a plurality of cylindrical pins having a circular section such that the braking strip 3 can be connected radially to the supporting bell 2. Alternatively, it is also possible to use notched pins.

More precisely, the pins 4 are housed in a plurality of radial sockets 7 formed in the peripheral annular portion 6 of the supporting bell 2, in such a way that a terminal section of each pin, essentially equal to half of its length, projects from each of these radial sockets 7, to engage with a corresponding radial socket 8 formed in the braking strip 3.

The aforesaid radial sockets 7 formed in the supporting bell 2 extend throughout the thickness of the peripheral annular portion 6, so that they are open at the opposing inner and outer ends. Conversely, the radial sockets 8 formed in the braking strip 3 consist of a plurality of blind holes, whose depth is sufficient to accommodate the end portions of the pins 4.

Advantageously, the connecting elements 4, in other words the pins, are inserted into the holes 8 of the braking strip 3 in such a way that they are fixed immovably to it, while they are inserted in the sockets 7 of the supporting bell 2 in such a way that they can slide radially.

In a preferred embodiment, the cylindrical pins 4 are inserted with a predetermined degree of forcing into the radial holes 8 formed in the braking strip 3. Alternatively, the pins 4 can be fixed to the braking strip by welding or another functionally equivalent method.

The radial sockets 7 have cross-sections complementary to those of the cylindrical pins 4. Additionally, the cylindrical pins 4 are inserted into the radial sockets 7 of the supporting bell 2 in such a way as to form a coupling between complementary profiles without interference. Preferably, the pins 4 are inserted with a minimum clearance into the radial sockets 7. This enables the cylindrical pins 4 to slide radially in the radial sockets 7, which thus act as guides as well as supports of the cylindrical pins 4.

In the example shown, the cylindrical pins 4 and the cylindrical sockets 7 have a circular cross-section.

The disc 1 also comprises retaining means 9 associated with the inner surface of the supporting bell to prevent the connecting means 4, in other words the cylindrical pins, from falling out of the radial sockets 7 of the supporting bell 2.

In the example, the retaining means 9 comprise an elastic ring designed to form the inner bottom end (in other words the end nearer the axis of symmetry X-X of the disc 1) of the radial sockets 7 formed in the supporting bell 2.

The elastic ring 9 is an open ring having a width L essentially equal to the transverse width of the radial sockets 7 formed in the supporting bell 2. The ring 9 is forced elastically into the supporting bell 2 and is positioned next to the radial sockets 7 formed in the supporting bell 2.

Advantageously, an inner circumferential socket is formed in the supporting bell 2, passing through the radial sockets 7; this is designed to receive the elastic ring 9 in such a way as to ensure its correct axial positioning.

Preferably, the braking strip 3 is made from cast iron of the type normally used for disc brakes, such as high-carbon cast iron.

The cylindrical pins 4 can be made from steel, while the supporting bell 2 can be made from either aluminium alloy or cast iron.

The disc 1 is assembled by positioning the braking strip 3 around the supporting bell 2 and then inserting the pins 4 into the radial sockets 7 from the lower ends of the sockets. The pins 4 are pushed radially outwards, in such a way that they emerge from the supporting bell 2 and can be force-fitted into the radial holes 8 formed in the braking strip 3.

The elastic ring 9 is then compressed to reduce its circumference (this is facilitated by the fact that the ring is open), positioned in the aforesaid inner circumferential socket, and then released, in such a way that it is forced from the inside against the supporting bell 2, in the way described previously. The symmetrical arrangement of the radial sockets and of the connecting means makes it possible to obtain correct positioning and centring of the braking strip 3 with respect to the supporting bell 2.

Preferably, the internal diameter of the braking strip 3 is greater than the external diameter of the peripheral annular portion 6 of the supporting bell 2. Consequently, when the disc 1 is correctly assembled, the supporting bell 2 is not in direct contact with the braking strip 3. The continuity between the two aforesaid elements is established solely through the connecting elements 4, in other words by the pins.

As an alternative to what is described above, the connecting means 4 may comprise elastic pins, which make the presence of the retaining means 9 superfluous. Thus, for example, a tubular split pin of a conventional type could be advantageously used, this pin being locked in the holes 8 of the braking strip 3 by the elasticity of a cylinder cut along a generatrix. Clearly, in this case also, the diameter of the holes 8 and of the radial sockets 7 is specified in such a way as to be, respectively, smaller and greater than (or at least equal to) the diameter of the elastic pin. It is also possible to use a spiral elastic pin, made from sheet steel, preferably spring steel.

The aforesaid elastic pins may have a cylindrical or cylindrical-conical shape. In the latter case, the holes 8 of the braking strip 3 are engaged by the conical portion of the pin, which has a configuration diverging from the remaining cylindrical portion.

In the operation of the disc 1, the disc is mounted on the disc brake in such a way that the braking strip 3 interacts with the calipers of the disc brake as described above. The heat generated by the friction between the pads of the brake calipers and the surface of the braking strip 3 causes the heating, and possibly the overheating, of the latter.

As a result of the thermal stresses to which it is subjected, the braking strip is compelled to expand. As explained previously, the braking strip tends to expand in the radial direction, thus remaining coplanar with itself.

It must be emphasized that the increase in temperature of the braking strip 3 can be transmitted to the supporting bell 2 only through the cylindrical pins 4, since, because of what has been stated above, the braking strip 3 and the supporting bell 2 are not in direct contact. This considerably limits the amount of heat that can be transmitted to the supporting bell 2, and therefore this bell is subject to much smaller thermal deformations.

The deformation of the braking strip 3 only is made possible by the fact that the pins 4 can slide radially with respect to the sockets 7 of the peripheral annular portion 6 of the supporting bell 2. In other words, the radially slidable coupling between the supporting bell 2 and the connecting means 4 allows the braking strip 3 to expand, as a result of the thermal stresses to which it is subjected, while remaining coplanar with itself.

During the running of the vehicle on which the disc brake is mounted, the disc 1 rotates together with the wheel hub. Consequently, the friction material which is worn by the pads of the brake calipers and which might become wedged in the radial sockets 7 of the supporting bell 2, together with dirt picked up from the road, is moved by centrifugal force by the supporting bell towards the outside of the disc 1. This makes it possible, advantageously, to keep the radial sockets 7 of the supporting bell 2 and the pins 4 free of the aforesaid wear material and dirt, thus ensuring the correct radial sliding of the pins 4 with respect to the sockets 7 over a period of time.

As may be appreciated from the above description, the disc for a disc brake according to the invention can be used to meet the aforesaid requirement and to overcome the disadvantages cited with reference to the prior art. This is because, as explained above, the structure of the disc according to the invention makes it possible to reduce to a minimum the transmission of heat from the braking strip to the supporting bell, and simultaneously allows the braking strip to expand radially, thus remaining coplanar with itself.

Another advantage of the disc for a disc brake according to the invention lies in the fact that it is structurally and functionally simple, so that it is inexpensive to produce and assemble, and ensures reliable operation over a period of time.

Clearly, a person skilled in the art may, in order to meet contingent and specific requirements, make numerous modifications and variations to the disc for a disc brake according to the invention, all such modifications and variations being contained within the scope of protection of the invention, as defined by the following claims.

Thus, for example, the connecting pins between the supporting bell and the braking strip may be replaced by other functionally equivalent elements, such as pegs and studs.

Alternatively, the cross-section of the pins may differ from the circular cross-section described above, provided that the cross-section of the radial sockets also differs in a corresponding way.

## Claims

1. Disc for disc brake, comprising a supporting bell (2), a braking strip (3) coaxial with the bell, and a plurality of connecting elements (4) capable of connecting the braking strip (3) to the supporting bell (2), in which the said connecting elements (4) project from radial sockets (7) which are complementary to them and are formed in the supporting bell (2) to engage in corresponding radial sockets (8) formed in the braking strip (3), **characterized in that** the said connecting elements (4) are fixed immovably to the braking strip (3) and are housed in the said radial sockets (7) of the supporting bell (2) in such a way that they can slide radially.

2. Disc according to Claim 1, in which the said radial sockets (7) of the supporting bell (2) are open at their inner ends to allow the corresponding connecting elements (4) to be inserted radially from the interior.

3. Disc according to Claim 2, in which retaining means (9) are associated with the inner surface of the supporting bell (2) to prevent the connecting means (4) from falling out of the radial sockets (7) of the supporting bell (2).

4. Disc according to Claim 3, in which the said retaining means comprise an elastic ring (9) designed to form the bottom end of the radial sockets (7) of the supporting bell (2).

5. Disc according to Claim 4, in which the supporting bell (2) comprises a circumferential inner socket passing through the radial sockets (7) of the supporting bell (2) and designed to house the said elastic ring (9), thus ensuring its correct positioning.

6. Disc according to Claim 4, in which the said elastic ring (9) is an open ring.

7. Disc according to Claim 4, in which the said ring has a width (L) essentially equal to the transverse width of the radial sockets (7) of the supporting bell (2).

8. Disc according to Claim 4, in which the said ring is forced elastically into the supporting bell (2).

9. Disc according to Claim 1, in which the said connecting elements (4) are inserted with a clearance into the corresponding radial sockets (7) of the supporting bell (2).

10. Disc according to Claim 1, in which the said connecting elements are cylindrical pins (4).

11. Disc according to Claim 10, in which the said pins (4) have a circular cross section and the said sockets (7, 8) have a circular cross section.

12. Disc according to Claim 1, in which the said connecting elements are elastic pins.

13. Disc according to Claim 1, in which the said radial sockets (7) of the supporting bell (2) are radial through holes.

14. Disc according to Claim 1, in which the said sockets of the braking strip (3) are radial blind holes (8).

15. Disc according to Claim 1, in which the internal diameter of the braking strip (3) is greater than the external diameter of the supporting bell (2), the continuity between the braking strip (3) and the supporting bell (2) being established only through the said connecting elements (4).

## Patentansprüche

1. Scheibe für Scheibenbremse mit einer Tragglocke (2), einem zur Glocke koaxialen Bremsstreifen (3) und einer Mehrzahl an Verbindungselementen (4), die den Bremsstreifen (3) mit der Tragglocke (2) verbinden können, wobei die Verbindungselemente (4) radial aus Aufnahmen (7) hervorstehen, die zu diesen komplementär sind und in der Tragglocke (2) ausgeformt sind, um in entsprechende radiale, in dem Bremsstreifen (3) ausgeformte Ausnehmungen (8) einzugreifen,
**dadurch gekennzeichnet,**
**dass** die Verbindungselemente (4) unbewegbar an dem Bremsstreifen (3) befestigt sind und von den radialen Aufnahmen (7) der Tragglocke (2) derart aufgenommen werden, dass sie radial gleiten können.

2. Scheibe nach Anspruch 1,
**wobei** die radialen Aufnahmen (7) der Tragglocke (2) an ihren inneren Enden offen sind, um das radiale Einsetzen entsprechender Verbindungselemente (4) von Innen zu ermöglichen.

3. Scheibe nach Anspruch 2,
**wobei** Rückhaltemittel (9) der Innenfläche der Tragglocke (2) zugeordnet sind, um ein Herausfallen der Verbindungsmittel (4)aus den radialen Aufnahmen (7) der Tragglocke (2) zu verhindern.

4. Scheibe nach Anspruch 3,
**wobei** die Rückhaltemittel einen des Bodenende der radialen Aufnahmen (7) der Tragglocke bildenden elastischen Ring (9) aufweisen.

5. Scheibe nach Anspruch 4,
**wobei** die Tragglocke (2) eine umfangsseitige innere, die radial inneren Aufnahmen (7) der Tragglockedurchschneidende Aufnahme aufweist, die so ausgebildet ist, dass sie den elastischen Ring (9) aufnimmt und so dessen richtige Platzierung sicherstellt.

6. Scheibe nach Anspruch 4,
**wobei** der elastische Ring (9) ein offener Ring ist.

7. Scheibe nach Anspruch 4,
**wobei** der Ring eine Breite (L) aufweist, die im wesentlichen gleich dem Durchmesser der radialen Aufnahmen (7) der Tragglocke (2) ist.

8. Scheibe nach Anspruch 4,
**wobei** der Ring elastisch in die Tragglocke (2) eingespannt ist.

9. Scheibe nach Anspruch 1,
**wobei** die Verbindungselemente (4) mit Spiel in die entsprechenden radialen Aufnahmen (7) der Tragglocke (2) eingesetzt sind.

10. Scheibe nach Anspruch 1,
**wobei** die Verbindungselemente zylindrische Bolzen (4) sind.

11. Scheibe nach Anspruch 10,
**wobei** die Bolzen (4) einen Kreisquerschnitt und die Aufnahmen (7, 8) einen Kreisquerschnitt aufweisen.

12. Scheibe nach Anspruch 1,
**wobei** die Verbindungselemente elastische Bolzen sind.

13. Scheibe nach Anspruch 1
**wobei** die radialen Aufnahmen (7) der Tragglocke (2) radiale Durchgangsbohrungen sind.

14. Scheibe nach Anspruch 1,
**wobei** die radialen Aufnahmen des Bremsstreifens (3) radiale Blindbohrungen (8) sind.

15. Scheibe nach Anspruch 1,
**wobei** der Innendurchmesser des Bremsstreifens (3) größer ist als der Außendurchmesser der Tragglocke (2) und die Verbindung zwischen dem Bremsstreifen (3) und der Tragglocke (2) allein durch die Verbindungselemente (4) hergestellt wird.

## Revendications

1. Disque pour frein à disque, comprenant une cloche de support (2), une bande de freinage (3) coaxiale à la cloche, et une pluralité d'éléments de connexion (4) aptes à relier la bande de freinage (3) à la cloche de support (2), dans lequel lesdits éléments de connexion (4) s'étendent depuis des embases radiales (7) qui sont complémentaires à ceux-ci et qui sont formées dans la cloche de support (2) de façon à s'engager dans des embases radiales correspondantes (8) formées dans la bande de freinage (3), **caractérisé en ce que** lesdits éléments de connexion (4) sont fixés de façon immobile à la bande de freinage (3) et sont logés dans lesdites embases radiales (7) de la cloche de support (2) de façon à pouvoir coulisser radialement.

2. Disque selon la revendication 1, dans lequel lesdites embases radiales (7) de la cloche de support (2) sont ouvertes à leurs extrémités intérieures pour permettre l'insertion des éléments de connexion correspondants (4) radialement depuis l'intérieur.

3. Disque selon la revendication 2, dans lequel des moyens de retenue (9) sont associés à la surface interne de la cloche de support (2) pour empêcher les moyens de connexion (4) de sortir des embases radiales (7) de la cloche de support (2).

4. Disque selon la revendication 3, dans lequel lesdits moyens de retenue comprennent une bague élastique (9) conçue pour former l'extrémité inférieure des embases radiales (7) de la cloche de support (2).

5. Disque selon la revendication 4, dans lequel la cloche de support (2) comprend une embase interne circonférentielle traversant les embases radiales (7) de la cloche de support (2) et conçue pour loger ladite bague élastique (9), assurant ainsi son positionnement correct.

6. Disque selon la revendication 4, dans lequel ladite bague élastique (9) est une bague ouverte.

7. Disque selon la revendication 4, dans lequel ladite bague a une largeur (L) sensiblement égale à la largeur transversale des embases radiales (7) de la cloche de support (2).

8. Disque selon la revendication 4, dans lequel ladite bague est forcée élastiquement dans la cloche de support (2).

9. Disque selon la revendication 1, dans lequel lesdits éléments de connexion (4) sont insérés avec un jeu dans les embases radiales correspondantes (7) de la cloche de support (2).

10. Disque selon la revendication 1, dans lequel lesdits éléments de connexion sont des broches cylindriques (4).

11. Disque selon la revendication 10, dans lequel lesdites broches (4) ont une section circulaire et lesdites embases (7, 8) ont une section circulaire.

12. Disque selon la revendication 1, dans lequel lesdits éléments de connexion sont des broches élastiques.

13. Disque selon la revendication 1, dans lequel lesdites embases radiales (7) de la cloche de support (2) sont des trous traversants radiaux.

14. Disque selon la revendication 1, dans lequel lesdites embases de la bande de freinage (3) sont des trous borgnes radiaux (8).

15. Disque selon la revendication 1, dans lequel le diamètre intérieur de la bande de freinage (3) est supérieur au diamètre extérieur de la cloche de support (2), la continuité entre la bande de freinage (3) et la cloche de support (2) étant établie seulement par lesdits éléments de connexion (4).
